# EUROPÄISCHE PATENTSCHRIFT

(11) **EP 1 586 372 B1**
(45) Veröffentlichungstag und Bekanntmachung des Hinweises auf die Patenterteilung: **24.06.2009**
(21) Anmeldenummer: 05004877.6
(22) Anmeldetag: 05.03.2005
(51) Int. Cl.: B01J 19/00, C08G 65/26

(54) **Alkoxylierungen in mikrostrukturierten Kapillarreaktoren**
Alkoxylation in a microstructured capillary reactor
Alkoxylation dans un réacteur capillaire ayant une microstructure

(30) Priorität: 19.03.2004 DE 102004013551
(43) Veröffentlichungstag der Anmeldung: 19.10.2005
(73) Patentinhaber: Evonik Goldschmidt GmbH, 45127 Essen (DE)
(72) Erfinder: Hubel, Roland, Dr., 45128 Essen (DE); Markowz, Georg, Dr., 63791 Karlstein (DE); Recksik, Manfred, 45326 Essen (DE); Rudek, Markus Dr., 40547 Düsseldorf (DE); Wewers, Dietmar, Dr., 46242 Bottrop (DE); Zeller-Schuldes, Florian, 63526 Erlensee (DE)

(56) Entgegenhaltungen:
- WO-A-20/04012864
- DE-A1- 10 036 602
- DE-A1- 19 728 520
- US-A- 5 843 385
- US-A1- 2004 034 266

## Beschreibung

Die Erfindung betrifft ein Verfahren zur Herstellung von Polyetheralkoholen durch Alkoxylierung von Alkoholen sowie langkettige Polyetheralkohole mit enger Molekularmassenverteilung.

Polyetheralkohole sind wichtige Einsatzstoffe bei der Polyurethanschaumherstellung und der Produktion von Stoffen mit grenzflächenbeeinflussenden Eigenschaften. Die Herstellung von Polyetheralkoholen erfolgt zumeist durch ringöffnende Anlagerung von kurzkettigen Alkylenoxiden wie Ethylenoxid, Propylenoxid, Butylenoxid, Dodecenoxid und/oder Styroloxid an nieder-molekulare Alkohole wie Butanol und/oder Allylalkohol. Als Katalysatoren werden zumeist metallische Hydroxide oder Salze eingesetzt, wobei Kaliumhydroxid die größte praktische Bedeutung hat.

Die Umsetzung mit Ethylenoxid erfolgt nach folgendem Schema:

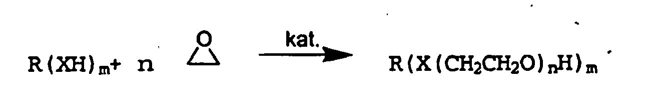

Unter XH sind im weitesten Sinne H-funktionelle Gruppen an einem organischen Rest R zu verstehen, wobei RXH in der Regel als ROH (Alkohol) vorliegt. Im Folgenden sollen unter Alkoholen auch andere H-funktionelle Substanzen (RXH, mit X = O, S, NH oder NR', wobei R' für einen organischen cyclischen oder acyclischen, gegebenenfalls substituierten Rest mit 1 bis 18 Kohlenstoffatomen steht) verstanden werden. In der Praxis haben jedoch die Alkohole mit X = O als Ausgangssubstanzen bei der Alkoxylierung die größte Bedeutung. Häufig wird der vorgelegte Alkohol zunächst mit einer Base wie KOH zum entsprechenden Alkoholat umgesetzt und nach Entfernung des entstandenen Reaktionswassers das Alkoholat mit Ethylenoxid umgesetzt. Im vorliegenden Fall verbleibt der Katalysator als reaktive Komponente im Reaktionsgemisch und fungiert gegebenenfalls ebenfalls als Startmolekül.

Bei Zugabe der Base bildet sich ein Gleichgewicht zwischen Alkohol/Base und Alkoholat/korrespondierender Säure:

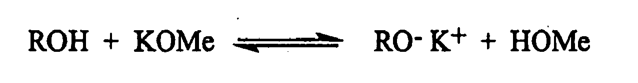

Die korrespondierende Säure kann entweder im System verbleiben oder aber destillativ entfernt werden. Verbleibt die korrespondierende Säure im System, wird auch die Base alkoxyliert. Zu jedem Zeitpunkt liegt dann ein Gleichgewicht vor, so dass sowohl Polyether des Startalkohols über die Stufe des Polyetheralkoholats gebildet werden wie auch Polyether der entsprechenden Base bzw. der bereits gebildeten Polyether aus der Reaktion der Base mit Alkylenoxid.

Die Produkte sind Gemische von Homologen des jeweiligen Startmoleküls unterschiedlicher Kettenlänge.

Ein wesentliches Problem bei der Alkoxylierung ist, dass während der Reaktion im Reaktor eine große Menge des noch nicht abreagierten verwendeten Monomeren vorliegt und somit ein erhöhtes Sicherheitsrisiko darstellt. Ferner muss bei diskontinuierlicher Betriebsweise bei einem Produktwechsel der Reaktor komplett entleert, gereinigt und wieder befüllt werden, bevor ein neues Produkt hergestellt werden kann.

Bei diskontinuierlicher Betriebsweise verbleibt das Produkt meist zwischen 1 und 30 Stunden, vorzugsweise zwischen 3 und 10 Stunden im Reaktor, so dass es zu ungewünschten Nebenprodukten kommt. Bei mit Allylalkohol gestarteten Polymerisationen erfolgt dabei eine Umlagerung des während der Reaktion gebildeten Allylethers zum Propenylether. Ferner tritt bei Verwendung von Propylenoxid als Monomer eine Umlagerung des Propylenoxids zum Allylalkohol ein, der als neuer Startalkohol fungiert und die Zusammensetzung des Endproduktes und die Molekularmassenverteilung beeinflusst.

Bei langkettigen Polyethern kommt es aufgrund von langen Verweilzeiten bei hohen Reaktionstemperaturen zur Abspaltung von Wasser am Kettenende und somit zur Bildung von Vinyletherderivaten. Das gebildete Wasser wirkt als Startmolekül und erhöht den Anteil von Diolen im Produkt.

Die Herstellung von Polyethern erfolgt in der Technik in der Regel nach zwei unterschiedlichen Verfahrensprinzipien.

Beim ersten Verfahrensprinzip wird die Alkoxylierung in einem Rührreaktor durchgeführt, der beheizbar und kühlbar ist. Der zu alkoxylierende Alkohol wird zusammen mit dem Katalysator im Rührbehälter vorgelegt und erhitzt. Anschließend wird Alkylenoxid in den Reaktor dosiert und der Behälterinhalt mit einem Rührer vermischt. Die Dosierung des Alkylenoxids erfolgt druck- und temperaturkontrolliert. Da die Reaktion sehr schnell und exotherm ist, ist eine intensive Kühlung erforderlich. Diese erfolgt bei Rührreaktoren durch einen äußeren Kühlmantel und/oder durch innenliegende Kühlschlangen. Nach der Umsetzung wird der Reaktor entspannt und nicht umgesetztes Alkylenoxid durch Anlegen von Vakuum entfernt. Der Katalysator wird mit Säure neutralisiert und die entstehenden Salze abfiltriert. Gegebenenfalls verbleiben die entstehenden Salze auch im Polyether.

Beim zweiten Verfahrensprinzip, wie es in der EP-A-0 419 419 dargelegt ist, wird die Alkoxylierung in einem Schlaufenreaktor durchgeführt. Dazu wird der zu alkoxylierende Alkohol zusammen mit dem Katalysator in einem Behälter vorgelegt und über eine Pumpe und Rohrleitung umgepumpt. Die Wärmeabfuhr geschieht mit Hilfe eines externen Wärmeaustauschers, der in der Umpumprohrleitung installiert ist.

Die Temperaturen während der Reaktion liegen bei beiden Verfahrensprinzipien im Bereich von 50 bis 220 °C, bevorzugt 110 bis 180 °C. Der Druck beträgt 2 bis 40 bar, bevorzugt 3 bis 6 bar. Der Alkoxylierungsgrad wird durch das Stoffmengenverhältnis von Alkohol zu Alkylenoxid eingestellt und ist durch die konstruktive Gestaltung des Reaktors wesentlich limitiert. Die Dauer der Reaktion hängt von der Reaktorgröße, der Effektivität der Kühleinrichtungen, der Mischgüte der Reaktanden und der Art des gewünschten Produkts ab. In der Regel beträgt die Dauer mehrere Stunden.

In der Praxis werden Alkoxylierungen diskontinuierlich durchgeführt, was zu Qualitätsschwankungen führt.

Ein wesentliches Problem ist die Selbstzersetzung von Ethylenoxid in der Gasphase. Zu deren Unterbindung wird die Ethylenoxidkonzentration im Gasraum des Reaktors mit Inertgasen, wie zum Beispiel Stickstoff herabgesetzt. Dadurch entstehen zusätzliche Abgasmengen beim Entspannen des Reaktors und der erreichbare Alkoxylierungsgrad oder die Chargengröße werden negativ beeinflusst.

Bedingt durch den großen Hold-Up bei der diskontinuierlichen Herstellung können größere Mengen von nicht abreagierten Alkylenoxiden angesammelt werden, die dazu führen können, dass die Reaktion unkontrollierbar wird.

Die diskontinuierlich arbeitenden Rühr- und Schlaufenreaktoren des Standes der Technik sind durch eine minimale und maximale Füllmenge begrenzt, die wiederum den erreichbaren Alkoxylierungsgrad limitiert. Hohe Alkoxylierungsgrade erfordern daher mehrere hintereinander geschaltete Batchreaktoren oder die Verwendung von Produktvorstufen, was sehr aufwendig ist.

In der Literatur werden daher bereits kontinuierliche Verfahren zur Alkoxylierung beschrieben, die die oben genannten Nachteile vermeiden sollen.

In DE-A-41 28 827 wird ein Verfahren zum katalysierten Alkoxylieren von Fettderivaten in einem Fallfilmreaktor dargestellt, in dem das Alkylenoxid gasförmig im Gleichstrom mit der Flüssigkeit in Kontakt gebracht wird. Vorteile sind ein geringer Gehalt an Nebenprodukten und hohe Sicherheit aufgrund sehr niedriger Alkylenoxidmenge in der Flüssigphase.

Die DE-A-100 36 602 betrifft einen Mikroreaktor für Reaktionen von Gasen mit Flüssigkeiten. Mehrere mit Nuten versehene Platten bilden Kapillare, in denen das Alkylenoxid mit der Flüssigkeit in Kontakt gebracht wird. Vorteil dieses Reaktors gegenüber DE-A-41 28 827 ist die geringe Fallfilmdicke mit geringen Stoffübergangswiderständen.

Es muss hierbei allerdings in Rechnung gestellt werden, dass das Alkylenoxid im Reaktor gasförmig vorliegt. Da die Alkoxylierung eine Flüssigphasenreaktion ist, muss zuerst ein Stoffübergang von der Gas- in die Flüssigphase erfolgen. Dieser zusätzliche Stofftransportwiderstand verlängert unerwünscht die Reaktionsdauer.

Zudem ist das Vorliegen einer Alkylenoxidgasphase wegen möglicher unkontrollierter Zersetzung aus Sicherheitsgründen problematisch.

In der DE-A-100 54 462 wird die kontinuierliche Umsetzung von Fettalkoholaten mit Alkylenoxiden in Platten- und/oder Rohrbündelwärmeaustauschern unter Druck beschrieben. Durch diese Art der Reaktionsführung soll die sicherheitskritische Gasphase von Alkylenoxiden weitgehend vermieden und in kontinuierlichem Betrieb eine einheitliche Produktqualität gewährleistet werden.

Allerdings wird ein grundsätzliches Problem der beschriebenen Vorrichtung an der multiplen Einspeisung der Alkylenoxide deutlich. Durch die multiplen Einspeisungen werden geringere maximale Alkylenoxid-Konzentrationen im Reaktor mit dem Ziel erreicht, lokale Überhitzungen an den Einspeisungen zu verringern, den Druck zu begrenzen sowie lokale Gasphasenbildung zu vermeiden.

Die Notwendigkeit multipler Einspeisungen ergibt sich aber aus den Limitierungen der eingesetzten Platten- und/oder Rohrbündelwärmeaustauscher. Die Wärmeabfuhr reicht selbst in den als effiziente Wärmeüberträger bekannten Plattenwärmeaustauschern nicht aus, um Temperaturspitzen ("Hot Spots") bei einer singulären Einspeisung zu vermeiden. Umso mehr trifft dies für Rohrbündelwärmeaustauscher zu. Daneben würden Druckanstiege in beiden Apparateausführungen zu zunehmend aufwendigem Design führen.

Das durch die Verwendung hoher Alkylenoxid-Konzentrationen theoretisch gegebene kinetische Potential kann unter diesen Bedingungen offensichtlich nicht ausgeschöpft werden.

Zudem sind in der DE-A-100 54 462 die Alkylenoxid-Einspeisungen nicht eingehend beschrieben. Aus den Figuren und der Beschreibung leitet sich ab, dass an diesen Einspeisungen vergleichsweise großräumige, insbesondere schlecht gekühlte (geringe spezifische Oberfläche, keine gegenüberliegende Kühlung) Geometrien vorliegen. Ohne Gegenmaßnahme führt dies bei den exothermen Alkoxylierungen zu einer Verstärkung der ohnehin zu erwartenden Hot Spots.

Bei Störungen, beispielsweise bei einer Unterbrechung der Produkt-Förderung, besteht sogar die Gefahr, dass die mangelnde Kühlung im Bereich der Mischungszonen aufgrund der dann nahezu adiabaten Temperaturerhöhung in diesem Bereich zu einem Sicherheitsproblem führt.

Darüber hinaus bedingt eine Rückvermischung in den Plattenwärmeaustauschern stark differierende Verweilzeiten der einzelnen Strömungsfäden, was zu Produkten mit einer breiten Molekularmassenverteilung führt.

Daher ist die Aufgabe der vorliegenden Erfindung das Potential möglichst hoher Reaktionsgeschwindigkeiten durch hohe Alkylenoxiddrücke optimal auszunutzen und Polyetheralkohole herzustellen, die deutlich weniger Nebenprodukte aufweisen und eine einheitliche Qualität aufweisen. Der Begriff "Polyetheralkohol" schließt dabei eine mögliche Anwesenheit von Polyetheralkoxylaten (Polyetheralkoholaten) ein. Weitere Aufgaben der Erfindung sind die Bereitstellung eines entsprechenden wirtschaftlich und sicher durchzuführenden Verfahrens und die erstmalige Bereitstellung entsprechender Polyetheralkohole einer optimal einheitlichen und hohen Qualität.

Der Reaktor zur Durchführung des Verfahrens ist ein mikrostrukturierter Reaktor mit parallelgeschalteten Kanalscharen zur Durchführung chemischer Reaktionen zwischen im Wesentlichen flüssigen Reaktionspartnern, insbesondere zur Herstellung von Polyetheralkoholen durch Alkoxylierung von Alkoholen mit unter den Reaktionsbedingungen flüssigem Alkylenoxid, gegebenenfalls in Gegenwart eines festen Katalysators, wobei die chemische Prozessführung in Räumen stattfindet, die von zwei oder mehreren im Wesentlichen planparallelen Platten oder Schichten gebildet werden, dadurch gekennzeichnet, dass die Eduktvermischung einphasig flüssig in jedem Reaktionskanal einzeln erfolgt und eine WärmeaustauscherVorrichtung, nämlich eine Kühl- oder Heizvorrichtung eingesetzt ist, wobei der Reaktor für Drücke bis zu 800 bar und Temperaturen im Bereich von - 30 °C bis 400 °C, insbesondere - 10 °C bis 300 °C ausgelegt ist.

Es ist allgemein bekannt, dass mikrostrukturierte Vorrichtungen für die Durchführung stark exothermer oder stark endothermer und/oder mischungssensitiver Reaktionen geeignet sind. Für die hier vorliegende Anwendung wird speziell ein Reaktor eingesetzt, in dem das Prozessmedium in parallelen, ggf. profilierten und/oder mit regelmäßigen Änderungen der Strömungsführung (z. B. "Zickzack"-Muster) versehenen Kanälen geführt wird. Die Kanäle sind bevorzugt als Kapillaren ausgebildet.

Die Fertigung der Kanäle erfolgt bevorzugt in einem mehrstufigen Prozess, bei dem in einem ersten Schritt zum Beispiel durch Fräsen, Ätzen, Stanzen oder ähnliche Verfahren die Kapillarstruktur in Form von Kanal-Scharen oder Nuten-Scharen in einzelnen Platten erzeugt wird und anschließend zum Beispiel durch (Diffusions-) Schweißen oder Löten eine Verbindung der Platten erfolgt. Jeder einzelne Prozesskanal ist dadurch gegenüber benachbarten Prozess-Kapillaren abgegrenzt.

Die Vermischung der Edukte kann sowohl außerhalb als auch innerhalb des Reaktors erfolgen. Bei der Vermischung außerhalb des Reaktors wird dem Reaktor ein geeignetes Mischorgan (z.B. ein statischer Mischer) vorgeschaltet. Vorzugsweise erfolgt die Vermischung der Edukte jedoch im Reaktor. Dabei werden zur Kontaktierung der Edukte die Ströme aus jeweils zwei benachbarten Platten zusammengeführt. Dazu befinden sich Öffnungen in allen Kanälen der einen Platte, durch die dann die Ströme aus den Kanälen der anderen, benachbarten Platte geführt werden. Es werden also die Eduktströme aus jeweils einem Kanal für Edukt 1 und einem Kanal für Edukt 2 zusammengeführt.

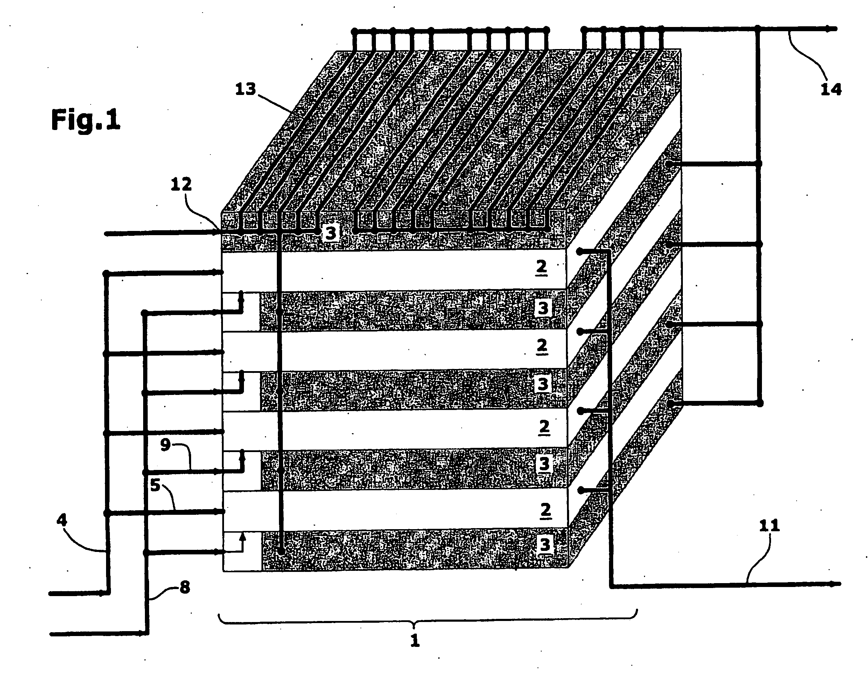

Die Figuren 1 bis 3 zeigen beispielhaft eine mögliche Ausgestaltung des Reaktors. Fig. 1 zeigt eine Gesamtansicht dieser Ausgestaltung. Der Reaktor 1 weist planparallele Reaktorplatten 2 auf, die an ihren äußeren Hauptebenen und zwischeneinander von planparallelen Kühlplatten 3 umschlossen sind. In gleicher Weise sind hier und bei allen folgenden beispielhaft beschriebenen Ausgestaltungen anstelle von Kühlplatten auch Heizplatten möglich. Die Hauptzuleitung 4 für eine Reaktionskomponente (Edukt) fächert sich in jeweils eine Zuleitung 5 pro Reaktorplatte auf, die unmittelbar in die Einlassstellen 6 am Eingang der Reaktionskanäle 7 münden. Eine weitere Hauptzuleitung 8 für eine zweite Reaktionskomponente (Edukt) befindet sich an derselben Seite des Reaktors und fächert sich entsprechend in jeweils eine Zuleitung 9 pro Reaktorplatte auf, die dann durch jeweils eine der Reaktorplatte benachbarte Kühlplatte geführt an einer Einlassstelle 10 auf die Reaktionskanäle 7 stoßen. Die Reaktionskanäle vereinigen sich auf der Produktseite nach Austritt aus dem Reaktor zur Produktsammlung 11. Das Kühlmedium wird hier durch den Einlass 12 in die jeweiligen Kühlkanäle 13 eingespeist. Nach Durchlaufen der Kühlplatten werden die Kühlkanäle vereinigt und das Kühlmedium abgeführt 14.

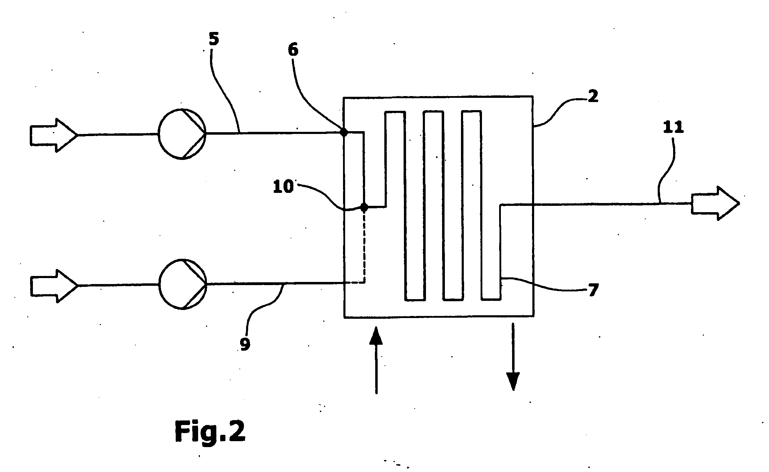

Fig. 2 ist eine Draufsicht einer Reaktorplatte 2 aus Fig. 1. Die Zuleitungen für die Edukte 5 und 9 sind hier mit Dosierpumpen versehen, die den Eduktstrom regulieren, wobei der gestrichelt ausgeführte Teil der Zuleitung 9 andeutet, dass er sich in einer anderen Ebene als die Reaktorplatte 2 befindet, gemäß Fig. 1 innerhalb einer benachbarten Kühlplatte. Die Reaktionskanäle verlaufen hier mäanderförmig und im Wesentlichen antiparallel alternierend.

Die Zusammenführung der Edukte kann erfindungsgemäß so erfolgen, dass das Reaktionsgemisch unmittelbar hinter der Mischungsstelle in einen wandgekühlten Bereich der Platte eintritt, in dem die bekanntermaßen vorteilhaften intensiven Wärmeübergangsbedingungen in Mikrostrukturen genutzt werden und eine Führung der Reaktion mit vernachlässigbaren Temperaturüberhöhungen möglich ist. Die Kühlkanäle in der Kühlplatte lassen sich parallel oder senkrecht zur Strömungsrichtung des Reaktionsmediums anbringen, wodurch eine Gleich-, Gegen- und Kreuzstromführung des Kühlmediums möglich wird. Dies erlaubt eine flexible Anpassung der Reaktionstemperatur an die Reaktionserfordernisse.

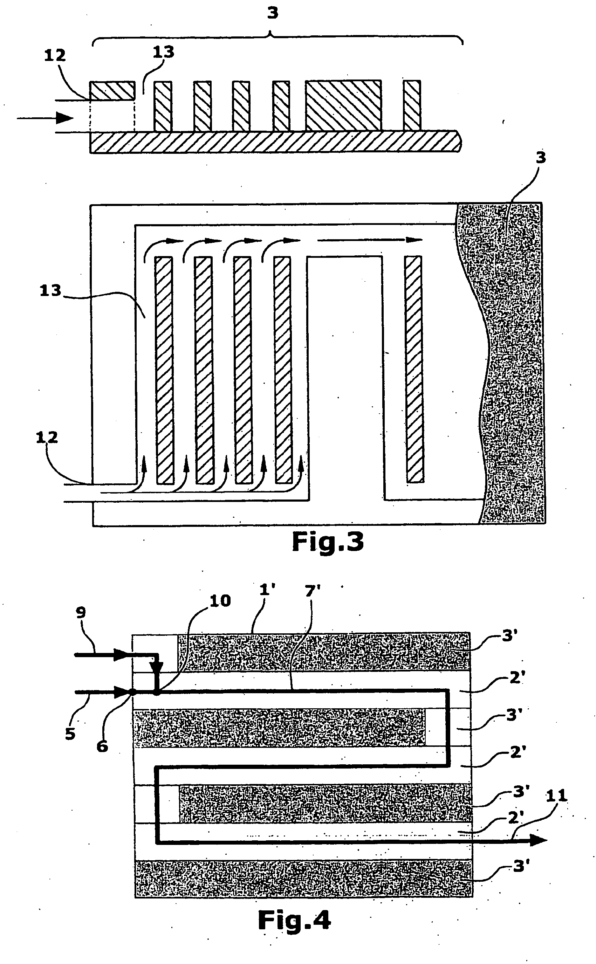

Fig. 3 zeigt eine detaillierte Seitenansicht (oben) sowie eine Draufsicht (unten) auf eine beispielhafte Ausgestaltung einer Kühlplatte 3, wobei Eduktzuleitungen 9 ausgelassen sind. Das Kühlmittel tritt durch den Einlass 12 in die Kühlplatte ein, die hier senkrecht zur Hauptströmungsrichtung des Reaktionsmediums mehrere parallel verlaufende, aufgefächerte Kühlkanäle 13 aufweist. In gleicher Weise kann der Aufbau der Kühlplatte, insbesondere der Verlauf der Kühlkanäle auch im Wesentlichen dem Aufbau der Reaktorplatte und dem Verlauf der Reaktionskapillaren entsprechen.

Fig. 4 zeigt in einer Seitenansicht eine weitere beispielhafte Ausgestaltung des erfindungsgemäßen Reaktors, wobei aus Gründen der Übersicht lediglich ein Reaktionskanal dargestellt ist. Hier verlaufen die zueinander parallelen Reaktionskanäle 7' nicht im Wesentlichen innerhalb der Ebene einer Reaktorplatte 2', sondern innerhalb einer Ebene senkrecht hierzu, wobei das Reaktionsmedium mäanderförmig in antiparallel alternierenden Bahnen geführt wird, deren antiparallele Abschnitte gegenüber den parallelen Abschnitten lang sind und jeweils in der Ebene einer Reaktorplatte 2' verlaufen.

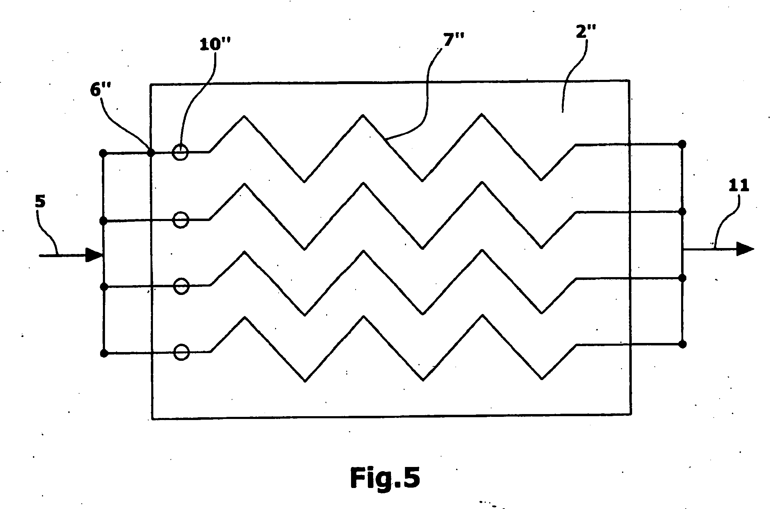

Eine andere Möglichkeit der Führung der Reaktionskanäle veranschaulicht Fig. 5. Die beispielhaft gezeigte Reaktorplatte 2'' nimmt vier Reaktionskanäle 7'' auf, die von der Einlassstelle 6" eines Eduktes in die Reaktionsplatte bis zum Austritt parallel und von einer weiteren Einlassstelle 10'' an zickzackförmig parallel verlaufen und sich produktseitig zur Produktsammlung vereinigen. Dabei verfügen die Edukt-Zuführungen je Reaktionsplatte zweckmäßig über eine gemeinsame Zuleitung (beispielhaft gezeigt ist Zuleitung 5). Ein solcherart ausgestalteter Reaktor hat den Vorteil, dass bei geringstem Raumbedarf bereits eine effiziente Reaktionsführung mit hohem Durchsatz und exzellenter Vermischung möglich ist.

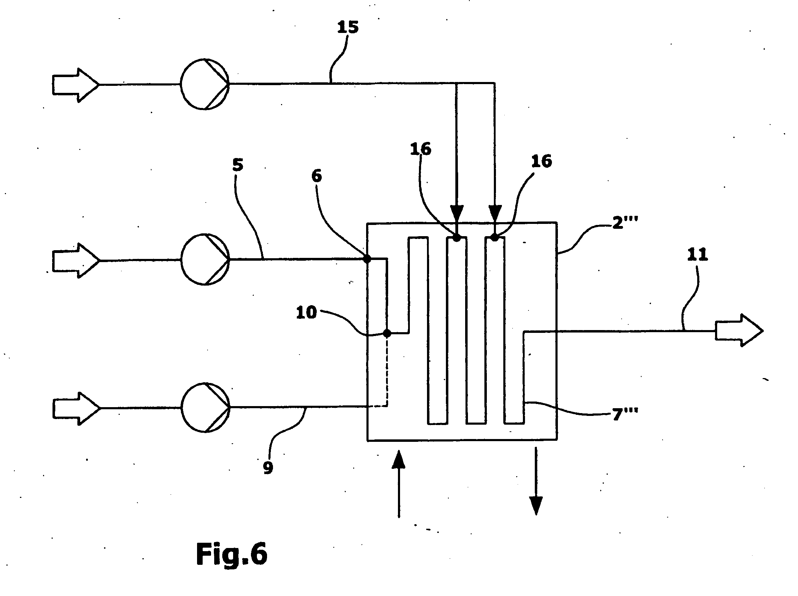

Fig. 6 illustriert eine mögliche Variante des erfindungsgemäßen Reaktors anhand einer Draufsicht auf eine Reaktorplatte. Die Reaktorplatte 2''' entspricht im Wesentlichen der Reaktorplatte 2 (Fig. 2) mit dem Unterschied, dass zusätzlich zu den Einlassstellen 6 bzw. 10 im Verlauf des Reaktionskanals 7''' innerhalb der Reaktorplatte 2''' zwei weitere von einer getrennten seitlich herangeführten Edukt-Zufuhr 15 gespeiste Einlassstellen 16 für die Zufuhr weiterer oder unterschiedlicher Edukte vorgesehen sind.

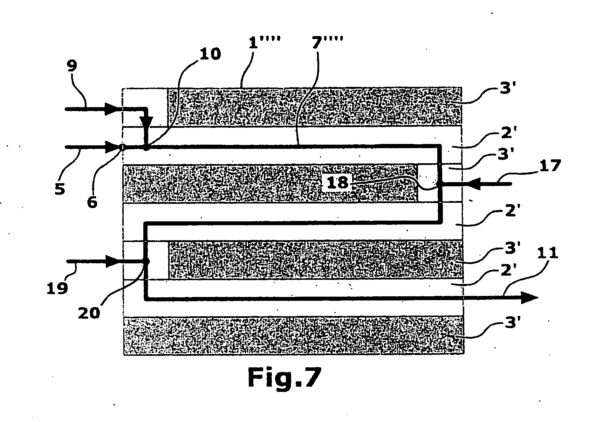

Fig. 7 illustriert eine weitere mögliche Variante des Reaktors anhand einer Seitenansicht auf einen Reaktor 1''''. Dieser entspricht im Wesentlichen dem in Fig. 4 dargestellten Reaktor 1' mit dem Unterschied, dass zusätzlich zu den Einlassstellen 6 bzw. 10 im Verlauf des Reaktionskanals 7'''' beim Durchtritt durch eine Kühlplatte 3' eine weitere von einer getrennten Edukt-Zuleitung 17 gespeiste Einlassstelle 18 sowie beim Durchtritt durch eine weitere Kühlplatte 3' eine zusätzliche von einer getrennten Edukt-Zuleitung 19 gespeiste Einlassstelle 20 vorgesehen ist. Durch die zusätzlichen Einlassstellen können gleiche wie in den Einlassstellen 6 und 10, aber auch unterschiedliche Edukte der Reaktion zugeführt werden.

Durch die hier beschriebene Konstruktion und ihre Ausgestaltungen werden die eingangs aufgeführten Probleme des Standes der Technik überwunden:,

Aufgrund der Kanalstruktur und geringer hydraulischer Abmessungen, insbesondere auch bei Kapillarstruktur der Reaktionskanäle, sind auch hohe Drücke vergleichsweise einfach zu handhaben. Daher kann der Reaktor einphasig betrieben werden und auch eine durch hohe Alkylenoxidkonzentrationen an der Einspeisung verursachte Druckerhöhung in dem für die Alkoxylierung typischen Temperaturbereich unbeschränkt beherrscht werden. Die lokale Stöchiometrie kann also unabhängig von apparativen Zwängen frei eingestellt und somit insbesondere die Kinetik in vorteilhafter Weise ausgenutzt werden, wodurch eine Prozessintensivierung erzielt wird.

Falls es für die Produktqualität sinnvoll/notwendig ist, ist eine Verwendung von multiplen Einspeisungen auch in diesem Reaktorkonzept nach dem oben beschriebenen Prinzip möglich. Dies ist insbesondere dann der Fall, wenn verschiedene Monomere blockweise angelagert werden müssen.

Ein Ausfall der Förderung führt zu keinem vergleichbar sicherheitskritischen Zustand, da die nicht oder schlecht gekühlten Reaktionsvolumina aufgrund der geringen hydraulischen Durchmesser der Kanäle drastisch kleiner sind als in konventionellen Reaktoren. Der Hold-Up von nicht umgesetzten Alkylenoxiden ist so gering, dass die adiabate Temperaturerhöhung bei Ausfall der Kühlung im mikrostrukturierten Reaktor nicht zu einem Sicherheitsproblem führt.

Die Rückvermischung in Kanal-Strukturen, insbesondere in Kapillarstrukturen, ist äußerst gering, so dass eine enge Molekularmassenverteilung der Produkte erzielt wird. Wird eine breite Molekularmassenverteilung angestrebt, so kann dies durch zusätzliche, nachgeschaltete Einspeisungen erreicht werden.

Ein weiterer Vorteil der Alkoxylierung im Mikroreaktor besteht darin, dass kein Risiko beim Scale-up besteht. Durch Erhöhung, beispielsweise modulare Erhöhung der Kanalanzahl im mikrostrukturierten Reaktor oder die Erhöhung der Anzahl der mikrostrukturierten Reaktoren kann die Produktionsleistung einfach und risikolos erhöht werden.

Es ist bekannt, dass im Bereich des kritischen Punktes die Stofftransportwiderstände stark reduziert werden und eine Intensivierung der Reaktionsabläufe eintritt. Die druckfeste Konstruktion des Reaktors erlaubt es, wirtschaftlich Drücke im Bereich des kritischen Punktes einzustellen und höhere Raum-Zeit-Ausbeuten zu erzielen. Der Druck im mikrostrukturierten Reaktor beträgt während des Betriebes vorzugsweise 11 bis 800 bar.

Da die Reaktionskomponenten während der gesamten Reaktion flüssig vorliegen, wird eine Stofftransporthemmung vermieden, wie sie in anderen Reaktorkonzepten, insbesondere Rührkesselreaktoren, auftritt. Damit können extrem kurze Verweilzeiten erzielt werden, die eine Erhöhung der Reaktionstemperatur ermöglichen. Dadurch wird überraschenderweise eine Verminderung von unerwünschten Nebenreaktionen bewirkt. Die Produktqualität wird dadurch verbessert.

Der mikrostrukturierte Reaktor kann daher insbesondere für die Durchführung kontinuierlicher Verfahren in der Flüssigphase ausgelegt werden.

Für den kontinuierlichen Betrieb kann der Reaktor klein ausgelegt werden. Das heißt, dass für eine Jahresproduktion von beispielsweise 1.500 to ein Reaktorvolumen (Hold-Up) von 24 l ausreicht. Dies ist auch unter Sicherheitsaspekten ein großer Vorteil gegenüber herkömmlichen Reaktoren zur Herstellung von Polyetheralkoholen, der insbesondere in Schlaufenreaktoren nicht erzielt werden kann. Das geringe Reaktorvolumen macht darüber hinaus schnelle Produktwechsel möglich, was die flexible Herstellung einer Palette von Produkten bei ansonsten kontinuierlichem Betrieb ermöglicht.

Der Reaktor kann auch in an sich aus der DE-A-100 36 602 bekannten Weise ausgeführt werden mit dem Unterschied und der Maßgabe, dass er für die Durchführung chemischer Reaktionen zwischen im Wesentlichen flüssigen Reaktionspartnern unter hohem Druck und bei hohen Temperaturen ausgelegt ist. Die Reaktionskanäle können dabei bevorzugt profiliert ausgeführt werden und/oder werden mit regelmäßigen Änderungen der Strömungsführung versehen. Auf diese Weise wird eine optimale Durchmischung der Reaktanden erreicht, was kurze Reaktionszeiten und enge Molekularmassenverteilungen im Produkt ermöglicht.

Der hydraulische Durchmesser der Kanäle ist vorteilhaft kleiner als 2 mm, insbesondere kleiner als 1 mm, da hier der Wärmeübergang zu der Umgebung besser ist.

Die Wärmeaustauschervorrichtung ist beispielsweise eine Kühlvorrichtung. Diese kann vorteilhaft Kühlkanäle in der Kühlplatte parallel oder senkrecht zur Strömungsrichtung des Reaktionsmediums umfassen, wobei die Kanäle bevorzugt von außen mit Hilfe eines Kühlmediums gekühlt werden.

Der Reaktor kann besonders vorteilhaft in den Reaktionskanälen mehrere, insbesondere bis zu 20, besonders bevorzugt bis zu 10 Einlassstellen für gleiche oder verschiedene Edukte vorsehen. Ein Alkylenoxid oder verschiedene Alkylenoxide können an einer oder mehreren Stellen in die Kanäle des mikrostrukturierten Reaktors zudosiert werden. So wird ermöglicht, reine oder definiert gemischte Oligomere und/oder Polymere herzustellen, wobei durch die Wahl der Position und der Zufuhr der Edukte durch die Einlassstellen nicht nur die globale Zusammensetzung kettenförmiger oder verzweigter Polymere und/oder Oligomere, sondern insbesondere auch die lokale Zusammensetzung beeinflusst, eingestellt und/oder variiert werden kann.

Das erfindungsgemäße Verfahren zur Herstellung von Polyetheralkoholen der allgemeinen Formel (I) 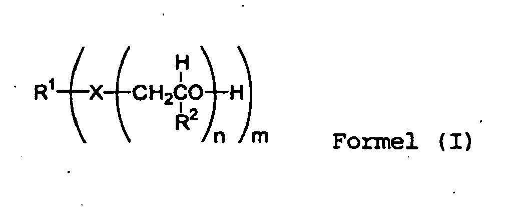 durch Alkoxylierung von Verbindungen der allgemeinen Formel R¹(XH)ₘ in einem mikrostrukturierten Reaktor wie oben beschrieben ist dadurch gekennzeichnet, dass man die Verbindung R¹(XH)m und einen geeigneten Katalysator vermischt und in den Reaktor einführt, hierzu 1 bis 300, insbesondere 2 bis 150, ganz besonders 5 bis 120 oder optimal 10 bis 80 Stoffmengenäquivalente Alkylenoxid direkt oder an mehreren Stellen in den Reaktor einspeist und mit der Verbindung R¹(XH)ₘ, Katalysator und/oder deren Folgeprodukten vermischt, in den Reaktionskapillaren bei einer Temperatur im Bereich von 50 bis 300 °C und einem Druck im Bereich von 11 bis 800 bar umsetzt und anschließend das Produktgemisch kühlt, wobei R¹ in der allgemeinen Formel R¹(XH)ₘ für einen ein- oder mehrwertigen organischen Rest steht, m für eine dementsprechende ganze Zahl steht, R² im Molekül einheitlich oder verschieden für Wasserstoff und/oder einen organischen Rest, insbesondere CH₃, C₂H₅, Phenyl, C₁₀H₂₁ oder Allyloxymethyl steht, X für O, S, NH oder NR' steht und R' ein organischer cyclischer oder acyclischer, gegebenenfalls substituierter Rest mit 1 bis 26 Kohlenstoffatomen ist.

Das Alkylenoxid kann somit aus einheitlichen oder auch aus einem Gemisch verschiedener Monomere aufgebaut sein.

Das Verfahren kann bevorzugt kontinuierlich betrieben werden. So lassen sich besonders kurze Verweilzeiten der Reaktanden und des Produktes im Reaktor erzielen, was zu besonders hoher Produktreinheit, Produkteinheitlichkeit und enger Molekulazmassenverteilung führt. Mit dem erfindungsgemäßen Reaktor haben sich nach dem erfindungsgemäßen Verfahren im kontinuierlichen Betrieb beispielsweise Polyethylenoxide und Polypropylenoxide in rein weißer Form herstellen lassen, im Gegensatz zu braunem oder bräunlichem Produkt, das nach batchweisen Betrieb herkömmlicher Verfahren erzielt wird.

Bevorzugt beträgt die Verweilzeit des Reaktionsgemisches in den Reaktionskanälen 1 bis 600 s, insbesondere 50 bis 400 s, ganz besonders 100 bis 300 s. Kürzere Verweilzeiten haben je nach Katalysatorgehalt und Reaktionstemperatur den Nachteil, dass die Reaktion möglicherweise nicht vollständig abläuft, während längere Verweilzeiten zu Produktverunreinigungen, -verfärbungen sowie uneinheitlicheren Produkten führen können, insbesondere in Bezug auf die Molekularmassenverteilung.

Die Reaktionstemperatur in den Reaktionskapillaren wird besonders bevorzugt im Bereich 80 bis 200 °C, insbesondere 120 bis 200 °C gewählt, besonders bevorzugt ist auch eine Reaktionstemperatur im Bereich von 185 °C bis 195 °C. Dadurch wird zum einen eine ausreichend hohe Reaktionsgeschwindigkeit und hoher Reaktionsumsatz sichergestellt, was dazu beiträgt, die Verweilzeiten im Reaktor zu verkürzen und die Produkte frei von Edukten zu erhalten, zum anderen werden möglicherweise störende Nebenreaktionen, insbesondre eine bei zu hoher Temperatur eintretende Zersetzung der Produkte vermieden.

Ein Druck in den Reaktionskanälen im Bereich 11 bis 800 bar, bevorzugt 40 bis 500 bar, besonders bevorzugt 60 bis 180 bar stellt dabei sicher, dass das Alkylenoxid auch bei erhöhter Temperatur flüssig vorliegt. Zudem begünstigt hoher Druck die Reaktionsgeschwindigkeit und den Umsatz sowie die Durchmischung der Reaktanden. Dennoch sollte der Druck aus Sicherheitsgründen 800 bar nicht überschreiten, um einen wirtschaftlichen Betrieb zu ermöglichen.

Obwohl eine Vielzahl verschiedener Epoxid-ringöffnender Startverbindungen R¹(XH)ₘ denkbar und auch Gegenstand der Erfindung sind, ist doch besonders bevorzugt, dass m für 1 bis 8, ganz besonders bevorzugt 1 und X für O steht.

Am meisten bevorzugt sind daher ein- oder mehrwertige Alkohole, insbesondere Alkylenalkohole und/oder Alkylalkohole. Wichtige Spezies sind Allylalkohol, Butanol, Etheralkohole, Polyetheralkohole, Glycerin, Propylenglykole, Ethylenglykole, Trimethylolpropan, Polyole, natürliche und synthetische Fettalkohole. Darüber hinaus können aber auch oder stattdessen Fettsäuren, Phosphorsäureester und/oder Phosphorsäuren vorteilhaft eingesetzt werden.

Für den Fall, dass X für NH steht, ist besonders bevorzugt, Ethylendiamin, Triethanolamin, Fettamine und/oder Amide zu alkoxylieren.

Beispiele für erfindungsgemäß besonders vorteilhaft einzusetzende Alkylenoxide sind Ethylenoxid, Propylenoxid, aber auch andere Epoxide wie Butylenoxid, Styroloxid, Dodecenoxid, Allylglycidylether sowie deren Gemische.

Im erfindungsgemäßen Verfahren setzt man bevorzugt den Katalysator in einer Menge von 0,001 bis 30 %, bezogen auf die Stoffmenge der Verbindung der allgemeinen Formel R¹(XH)ₘ ein. Dabei ist der Katalysator insbesondere eine Base, beispielsweise ein Alkalimetallmethanolat und/oder ein Alkalimetallhydroxid. Als Basen können ganz besonders bevorzugt Alkalimetallmethanolate, Salze oder Metallhydroxide eingesetzt werden, wobei Natriumhydroxid und Kaliumhydroxid wie auch Natriummethanolat und Kaliummethanolat am meisten bevorzugt sind. In diesem Fall setzt man bevorzugt 0,01 bis 30 %, insbesondere 1 bis 15 %, bezogen auf die Stoffmenge der Verbindung der allgemeinen Formel R¹(XH)ₘ ein. Ferner können als Katalysator Organometallverbindungen, beispielsweise eine oder mehrere Bimetallverbindungen wie Zn-Co- und/oder Zn-Fe-Katalysatoren oder auch Säuren eingesetzt werden. In diesem Fall setzt man bevorzugt 0,001 bis 10 %, insbesondere 0,01 bis 3 %, bezogen auf die Stoffmenge der Verbindung der allgemeinen Formel R¹(XH)ₘ ein. Die Reaktion verläuft dann nicht über das Alkoholat sondern über einen anderen Mechanismus.

Unter Polyetheralkoholen bzw. Polyetheralkoxylaten (Polyalkoxylaten) sollen im Sinne der Erfindung Oligomere und Polymere verstanden werden, die durch Polyaddition von Alkylenoxid an Alkoholate bzw. Alkohole und Base bzw. deren Folgeprodukte entstehen. Folgeprodukte der Alkohole bzw. der Alkoholate bzw. der Base sind in erster Linie solche Verbindungen, die durch einmalige oder mehrmalige Addition von Alkylenoxid an Alkoholate und die verwendete Base entstehen. Wurde die korrespondierende Säure der Base vor der Umsetzung mit Alkylenoxiden entfernt, entstehen keine Folgeprodukte der Base. Je nach Bedarf und Startalkohol kann die korrespondierende Säure der eingesetzten Base entfernt werden und somit das Alkoholat des Startalkohols gebildet werden oder aber im System verbleiben. Die Base nimmt dann an der Alkoxylierungsreaktion teil.

Der Katalysator kann im Startalkohol oder in einem geeigneten Lösungsmittel gelöst oder je nach Konzentration bevorzugt als Suspension eingesetzt werden. Hierdurch ist möglich, eine hohe Katalysatormenge zur Verfügung zu stellen. Hierdurch wird eine hohe und gleichmäßige Reaktionsgeschwindigkeit erzielt, was im Verein mit guter Wärmeabfuhr unter Vermeidung von Temperaturspitzen ("Hot Spots") zu einer hohen Reinheit der Produkte führt. Dies drückt sich unter anderem darin aus, dass erfindungsgemäß hergestellte Polyetheralkohole im Wesentlichen weiß bzw. farblos sind.

Das erfindungsgemäße Verfahren sieht beispielsweise vor, dass man das Alkylenoxid oder die Alkylenoxide in vollständiger Menge in der ersten Einlassstelle zu Beginn der Reaktion in den Reaktionsraum des Reaktors, der Reaktionskanäle, zugibt, ohne dass hierdurch im Stand der Technik übliche Schwierigkeiten, beispielsweise "Hot Spots" auftreten (Monofeed-Variante). Es besteht somit keine Notwendigkeit, die Zugabe auf mehrere Einlassstellen zu verteilen.

Dessen ungeachtet kann man jedoch das Alkylenoxid bzw. die Alkylenoxide auch durch einen oder mehrere weitere, insbesondere bis zu insgesamt 20, ganz besonders bevorzugt bis zu insgesamt 10 Einlassstellen in die Reaktionskapillare zuführen (Multifeed-Variante). Auf diese Weise kann man den Aufbau der Polyetheralkoholketten insbesondere blockweise beeinflussen oder definieren.

In ähnlicher Weise schließt die Erfindung auch ein, dieselbe oder verschiedene Verbindungen R¹(XH)ₘ, bevorzugt einen oder verschiedene Alkohole bzw. R¹(XH)ₘ-Katalysator-Gemische, bevorzugt in Form einer oder mehrerer Suspensionen über verschiedene Einlassstellen an verschiedenen Positionen der Reaktionskanäle bzw. des Reaktionsraumes zuzuführen. Auf diese Weise ist unter anderem möglich, den Aufbau und insbesondere die Molekularmassenverteilung der Produkte zu steuern.

Mit dem erfindungsgemäßen Verfahren lassen sich im erfindungsgemäßen Reaktor insbesondere Polyetheralkohole hoher Einheitlichkeit und Reinheit herstellen. Erfindungsgemäße Polyetheralkohole sind daher bevorzugt solche der allgemeinen Formel (I) 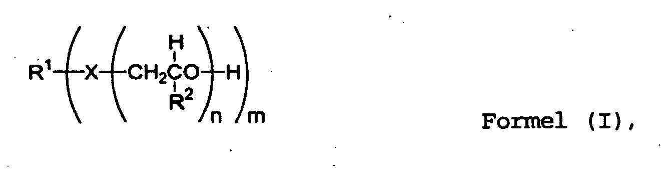 die sich durch eine Kettenlänge n im Bereich von 1 bis 200, bevorzugt 5 bis 150 und eine Molekulargewichtsverteilung M_{w}/Mₙ von nicht mehr als 1,20, bevorzugt von nicht mehr als 1,08, ganz besonders bevorzugt nicht mehr als 1,06 auszeichnen, wobei R¹ in der allgemeinen Formel R¹(XH)ₘ für einen ein- oder mehrwertigen organischen Rest steht, m für eine dementsprechende ganze Zahl steht, R² im Molekül einheitlich oder verschieden für Wasserstoff und/oder einen organischen Rest, insbesondere CH₃, C₂H₅, Phenyl, C₁₀H₂₁, Allyloxymethyl steht, X für O, S, NH oder NR' steht und R' ein organischer cyclischer oder acyclischer, gegebenenfalls substituierter Rest mit 1 bis 26 Kohlenstoffatomen ist.

Die erfindungsgemäßen Polyetheralkohole können bevorzugt einen Ethylenoxidgehalt im Produkt aufweisen, der geringer als 10 ppm ist.

Einen großen Vorteil stellt dabei dar, dass erfindungsgemäß erstmals bis zu 100 Alkylenoxideinheiten, insbesondere Ethylenoxideinheiten in eine Polyetheralkoholkette hoher Einheitlichkeit und Reinheit integriert werden können. Im Stand der Technik war dies kontinuierlich bis zu einer Kettenlänge von 20 Einheiten möglich. Die Reinheit der erfindungsgemäßen Produkte zeigt sich unter anderem darin, dass sie ohne weitere Reinigungsschritte im Wesentlichen farblos (weiß) gewonnen werden können, während auf herkömmliche Weise hergestellte Polyetheralkohole im alkalischen Zustand stets eine nur durch aufwendige Produktreinigung zu entfernende gelbliche bis bräunliche Verfärbung aufweisen.

Im Folgenden soll die Erfindung anhand einiger Ausführungsbeispiele näher erläutert werden.

### Beispiel 1a:

In den Figuren 1 bis 3 ist ein Reaktor dargestellt, der als Beispiel für einen Reaktor für das "Monofeed"-Verfahren dienen soll.

Es wurde ein Mikroreaktor 1 aus Edelstahl V2A gefertigt, der vier planparallele Reaktorplatten 2 aufwies, die an ihren äußeren Hauptebenen und zwischeneinander von insgesamt fünf planparallelen Kühlplatten 3 umschlossen waren. Der Reaktor wies auf einer Seite eine mit einer Dosierpumpe versehene Hauptzuleitung 4 für flüssiges Alkylenoxid auf, die sich in jeweils eine Zuleitung 5 pro Reaktorplatte auffächerte, die unmittelbar in die Einlassstellen 6 am Eingang der Reaktionskapillaren 7 mündeten. Eine weitere mit einer Dosierpumpe versehene Hauptzuleitung 8 für den Alkohol befand sich an derselben Seite des Reaktors und fächerte sich entsprechend in jeweils eine Zuleitung 9 pro Reaktorplatte auf, die dann durch jeweils eine der Reaktorplatte benachbarte Kühlplatte geführt an einer Einlassstelle 10 auf die Reaktionskapillaren 7 stießen. Die Reaktionskapillaren hatten einen hydraulischen Durchmesser von 600 µm und verliefen im Wesentlichen mäanderförmig antiparallel alternierend wie in Fig. 1 gezeigt und vereinigten sich auf der Produktseite nach Austritt aus dem Reaktor zur Produktsammlung 11. Die Kühlung erfolgte bei dem beschriebenen Mikroreaktor über ein Kühlmedium (Marlotherm^{®}), das durch den Einlass 12 in die jeweiligen Kühlkanäle 13 eingespeist wurde, die senkrecht zur Hauptströmungsrichtung des Reaktionsmediums angebracht waren. Nach Durchlaufen der Kühlplatten wurden die Kühlkanäle vereinigt und das Kühlmedium abgeführt 14.

In den Figuren nicht gezeigt sind temperatur- und druckmessende sowie -regulierende Vorrichtungen, die der Reaktor aufwies.

### Beispiel 1b:

Der Reaktor entsprach im Wesentlichen dem Reaktor des Beispiels 1a mit dem Unterschied, dass wie in Fig. 4 gezeigt, die zueinander parallelen Reaktionskapillaren 7' nicht im Wesentlichen innerhalb der Ebene einer Reaktorplatte 2' verlaufen, sondern innerhalb einer Ebene senkrecht hierzu, wobei das Reaktionsmedium mäanderförmig in antiparallel alternierenden Bahnen geführt wird, deren antiparallele Abschnitte gegenüber den parallelen Abschnitten lang sind und jeweils in der Ebene einer Reaktorplatte 2' verlaufen. Fig. 4 zeigt lediglich eine Reaktionskapillare. Es wurde jedoch eine Schar von vier parallel verlaufenden Reaktionskapillaren ausgeführt.

### Beispiel 1c:

Der Reaktor entsprach im Wesentlichen dem Reaktor des Beispiels 1a mit dem Unterschied, dass eine Reaktorplatte 2'' wie in Fig. 5 gezeigt, vier Reaktionskapillaren 7" aufnahm, die von der Alkohol-Einlassstelle zickzackförmig parallel verliefen und sich produktseitig zur Produktsammlung vereinigten. Wenn bei diesem Reaktor auch die Reaktionskapillaren und damit das Reaktionsvolumen und die Reaktionszeit kürzer und die Kühlfläche geringer waren als im Reaktor des Beispiels 1a, so wies dieser Reaktor den Vorteil auf, dass bei geringstem Raumbedarf bereits eine effiziente Reaktionsführung mit hohem Durchsatz und exzellenter Vermischung möglich ist.

### Beispiel 2a:

Eine Variante eines Reaktors für das "Multifeed"-Verfahren ist in Fig. 6 gezeigt. Er entsprach im Wesentlichen dem Reaktor des Beispiels 1a mit dem Unterschied, dass zusätzlich zu den Einlassstellen 6 bzw., 10 im Verlauf der Reaktionskapillare 7''' innerhalb der Reaktorplatte 2''' zwei weitere von einer getrennten seitlich herangeführten Edukt-Zufuhr 15 gespeiste Einlassstellen 16 für die Zufuhr weiterer oder unterschiedlicher Edukte, also Alkylenoxid und/oder Alkohol, vorgesehen war.

### Beispiel 2b:

Eine weitere Variante eines Reaktors für das "Multifeed-Verfahren" ist in Fig. 7 gezeigt. Er entsprach im Wesentlichen dem Reaktor des Beispiels 1b mit dem Unterschied, dass zusätzlich zu den Einlassstellen 6 bzw. 10 im Verlauf der Reaktionskapillare 7'''' beim Durchtritt durch eine Kühlplatte 3' eine weitere von einer getrennten Alkylenoxid-Zuleitung 17 gespeiste Einlassstelle 18 sowie beim Durchtritt durch eine weitere Kühlplatte 3' eine zusätzliche von einer getrennten Alkohol-Zuleitung 19 gespeiste Einlassstelle 20 vorgesehen war. Durch die zusätzlichen Einlassstellen konnten gleiche wie in den Einlassstellen 6 und 10, aber auch unterschiedliche Edukte der Reaktion zugeführt werden.

### Beispiel 3

Zunächst wurde ein Gemisch aus Butanol und Kaliummethanolat bereitet, so dass eine Suspension entstand, die 3 mol-% KOMe enthält, wobei der Katalysator teilweise gelöst vorlag. Dieses Gemisch wurde kontinuierlich unter gleichzeitiger Einspeisung von Ethylenoxid im Verhältnis 1 : 35 in den in Beispiel 1a beschriebenen Reaktor gepumpt. Die Verweilzeit betrug 200 Sekunden, die Wärmetauschertemperatur wurde auf 190 °C eingestellt. Der Druck im Reaktor betrug 120 bar. Das den Reaktor verlassende Produkt wurde nach einer kurzen Verweilstrecke auf 50 °C abgekühlt und unter Vakuum in ein Auffanggefäß gegeben. Hierbei wurden Restmengen von Ethylenoxid entfernt. Das entstandene feste Produkt war rein weiß, der EO-Gehalt geringer als 10 ppm, die Molekulargewichtsverteilung lag bei M_{w}/Mₙ = 1,06 bei einer mittleren Kettenlänge von n = 35 Der Umsatz lag bei 99,6 %. Es wurde kein Vinylether gebildet.

### Beispiel 4:

Wie in Beispiel 3 beschrieben, wurde eine Suspension aus Butanol und 10 mol-% KOMe kontinuierlich unter gleichzeitiger Einspeisung von Ethylenoxid im Verhältnis 1 : 65 in den Reaktor des Beispiels 1a gepumpt. Die Verweilzeit betrug 200 Sekunden, die Wärmetauschertemperatur wurde auf 150 °C eingestellt. Der Druck im Reaktor betrug 120 bar. Das den Reaktor verlassende Produkt wurde nach einer kurzen Verweilstrecke auf 50 °C abgekühlt und unter Vakuum in ein Auffanggefäß gegeben. Das entstandene feste Produkt war rein weiß, der Ethylenoxid(EO)-Gehalt geringer als 10 ppm, die Molekulargewichtsverteilung lag bei M_{w}/Mₙ = 1,1 bei einer mittleren Kettenlänge von n = 65. Der Umsatz lag bei 99,2 %. Es wurde kein Vinylether gebildet.

### Beispiel 5:

Wie in Beispiel 1 beschrieben, wurde eine Suspension aus Butanol und 5 mol-% KOMe kontinuierlich unter gleichzeitiger Einspeisung von Propylenoxid im Verhältnis 1 : 9 in den Reaktor gepumpt. Die Verweilzeit betrug 300 Sekunden, die Wärmetauschertemperatur wurde auf 150 °C eingestellt. Der Druck im Reaktor betrug 100 bar. Das den Reaktor verlassende Produkt wurde nach einer kurzen Verweilstrecke auf 50 °C abgekühlt und unter Vakuum in ein Auffanggefäß gegeben. Das entstandene flüssige Produkt war hellfarbig bis leicht bräunlich, der Propylenoxid(PO)-Gehalt geringer als 10 ppm, die Molekulargewichtsverteilung lag bei M_{w}/Mₙ = 1,2. Der Umsatz lag bei 97, 5 %.

### Beispiel 6:

Wie in Beispiel 1 beschrieben, wurde eine Suspension aus Butanol und 5 mol-% KOMe kontinuierlich unter gleichzeitiger Einspeisung von Propylenoxid im Verhältnis 1 : 12 in den Reaktor gepumpt. Die Verweilzeit betrug 300 Sekunden, die Wärmetauschertemperatur wurde auf 150 °C eingestellt. Der Druck im Reaktor betrug 100 bar. Das den Reaktor verlassende Produkt wurde nach einer kurzen Verweilstrecke auf 50 °C abgekühlt und unter Vakuum in ein Auffanggefäß gegeben. Das entstandene flüssige Produkt war hellfarbig bis leicht bräunlich, der Propylenoxid(PO)-Gehalt geringer als 10 ppm, die Molekulargewichtsverteilung lag bei M_{w}/Mₙ = 1,25. Der Umsatz lag bei 97 %.

## Patentansprüche

1. Verfahren zur Herstellung von Polyetheralkoholen der allgemeinen Formel (I) 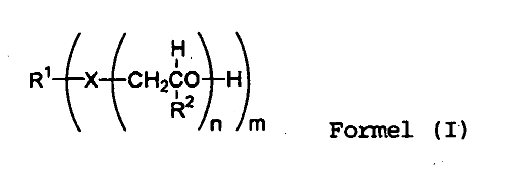 durch Alkoxylierung von Verbindungen der allgemeinen Formel R¹ (XH)ₘ in einem mikrostrukturierten Reaktor mit parallelgeschalteten Kanalscharen zur Durchführung chemischer Reaktionen zwischen im Wesentlichen flüssigen Reaktionspartnern, gegebenenfalls in Gegenwart eines festen Katalysators, wobei die chemische Prozessführung in Räumen stattfindet, die von zwei oder mehreren im Wesentlichen planparallelen Platten oder Schichten gebildet werden wobei die Eduktvermischung einphasig flüssig in jedem Reaktionskanal einzeln erfolgt und eine Wärmeaustauschervorrichtung, nämlich eine Kühl- oder Heizvorrichtung vorgesehen ist und der Reaktor für Drücke bis zu 800 bar und Temperaturen im Bereich von - 30 °C bis 400 °C ausgelegt ist **dadurch gekennzeichnet, dass** man die Verbindung R¹ (XH) ₘ, und einen geeigneten Katalysator vermischt und in den Reaktor einführt, hierzu 1 bis 300, bevorzugt 2 bis 150 Äquivalente Alkylenoxid direkt oder an mehreren Stellen in den Reaktor einspeist und mit der Verbindung R¹(XH)ₘ, Katalysator und/oder deren Folgeprodukten vermischt, in den Reaktionskanälen bei einer Temperatur im Bereich von 50 bis 300°C und einem Druck im Bereich von 11 bis 800 bar umsetzt und anschließend das Produktgemisch kühlt, wobei R¹ in der allgemeinen Formel R¹(XH)ₘ für einen ein- oder mehrwertigen organischen Rest steht, m für eine dementsprechende ganze Zahl steht, R² im Molekül einheitlich oder verschieden für Wasserstoff und/oder einen organischen Rest, insbesondere CH₃, C₂H₅, Phenyl, C₁₀H₂₁, Allyloxymethyl steht, X für O, S, NH oder NR' steht und R' ein organischer cyclischer oder acyclischer, gegebenenfalls substituierter Rest mit 1 bis 26 Kohlenstoffatomen ist.

2. Verfahren gemäß Patentanspruch 1, **dadurch gekennzeichnet, dass** man das Verfahren kontinuierlich betreibt.

3. Verfahren gemäß Patentanspruch 1 oder 2, **dadurch gekennzeichnet, dass** die Verweilzeit des Reaktionsgemisches im Reaktionskanal 1 bis 600 s, insbesondere 50 bis 400 s, ganz besonders 100 bis 300 s beträgt.

4. Verfahren gemäß einem der Patentansprüche 1 bis 3, **dadurch gekennzeichnet, dass** die Reaktionstemperatur in den Reaktionskanälen im Bereich 80 bis 200 °C, insbesondere 120 bis 200 °C beträgt.

5. Verfahren gemäß einem der Patentansprüche 1 bis 4, **dadurch gekennzeichnet, dass** der Druck in den Reaktionskanälen 40 bis 500, insbesondere 60 bis 180 bar beträgt.

6. Verfahren gemäß einem der Patentansprüche 1 bis 5, **dadurch gekennzeichnet, dass** X für O steht.

7. Verfahren gemäß Patentanspruch 6, **dadurch gekennzeichnet, dass** man ein- oder mehrwertige Alkohole, insbesondere Alkylenalkohole und/oder Alkylalkohole einsetzt.

8. Verfahren gemäß Patentanspruch 6, **dadurch gekennzeichnet, dass** man Fettsäuren, Phosphorsäureester und/oder Phosphorsäuren einsetzt.

9. Verfahren gemäß einem der Patentansprüche 1 bis 5, **dadurch gekennzeichnet, dass** X für NH steht.

10. Verfahren gemäß einem der Patentansprüche 6 bis 9, **dadurch gekennzeichnet, dass** das Alkylenoxid Ethylenoxid, Propylenoxid, Butylenoxid, Styroloxid, Dodecenoxid und/oder Allylglycidylether ist.

11. Verfahren gemäß einem der Patentansprüche 1 bis 10, **dadurch gekennzeichnet, dass** man den Katalysator in einer Menge von 0,001 bis 30 %, bezogen auf die Stoffmenge der Verbindung der allgemeinen Formel R¹(XH)ₘ einsetzt.

12. Verfahren gemäß Patentanspruch 11, **dadurch gekennzeichnet, dass** der Katalysator eine Base, insbesondere ein Alkalimetallmethanolat und/oder ein Alkalimetallhydroxid ist.

13. Verfahren gemäß Patentanspruch 12, **dadurch gekennzeichnet, dass** man den Katalysator in einer Menge von 0,01 bis 30 %, insbesondere 1 bis 15 %, bezogen auf die Stoffmenge der Verbindung der allgemeinen Formel R¹(XH)ₘ einsetzt.

14. Verfahren gemäß Patentanspruch 11, **dadurch gekennzeichnet, dass** der Katalysator eine Säure und/oder eine Organometallverbindung; insbesondere eine Bimetallverbindung ist.

15. Verfahren gemäß Patentanspruch 14, **dadurch gekennzeichnet, dass** man den Katalysator in einer Menge von 0,001 bis 10 %, insbesondere 0,01 bis 3 %, bezogen auf die Stoffmenge der Verbindung der allgemeinen Formel R¹(XH)ₘ einsetzt.

16. Verfahren gemäß einem der Patentansprüche 1 bis 15, **dadurch gekennzeichnet, dass** man Alkylenoxid, verschiedene Alkylenoxide und/oder Gemische verschiedener Alkylenoxide durch einen oder mehrere, insbesondere bis zu 20 Einlassstellen gemäß Patentanspruch 5 den Reaktionskapillarenzuführt.

17. Verfahren gemäß Patentanspruch 1, **dadurch gekennzeichnet, dass** man die Reaktionskanäle profiliert und/oder mit regelmäßigen Änderungen der Strömungsführung versieht.

18. Verfahren gemäß Patentanspruch 1 oder 2, **dadurch gekennzeichnet, dass** man hydraulische Durchmesser der Kanäle weniger als 2 mm, insbesondere weniger als 1 mm einsetzt.

19. Verfahren gemäß einem der Patentansprüche 1 bis 3, **dadurch gekennzeichnet, dass** man eine Kühlvorrichtung vorsieht und die Kühlvorrichtung Kühlkanäle in der Kühlplatte parallel oder senkrecht zur Strömungsrichtung des Reaktionsmediums umfasst.

20. Verfahren gemäß einem der-Patentansprüche 1 bis 4, **dadurch gekennzeichnet, dass** man in den Reaktionskanälen mehrere, insbesondere bis zu 20 Einlassstellen für gleiche oder verschiedene Edukte vorsieht.

21. Polyetheralkohole der allgemeinen Formel (I) 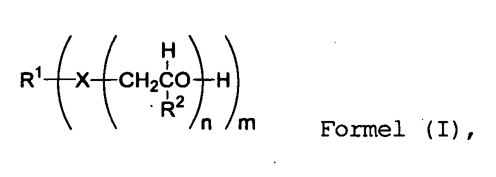 erhältlich nach einem Verfahren gemäß einem der Patentansprüche 1 bis 20, **dadurch gekennzeichnet, dass** sie eine Kettenlänge n im Bereich von 1 bis 100 und eine Molekulargewichtsverteilung M_{w}/Mₙ von nicht mehr als 1,20 aufweisen, wobei R¹ in der allgemeinen Formel R¹(XH)ₘ für einen ein- oder mehrwertigen organischen Rest steht, m für eine dementsprechende ganze Zahl steht, R² im Molekül einheitlich oder verschieden für Wasserstoff und/oder einen organischen Rest, insbesondere CH₃, C₂H₅, Phenyl, C₁₀H₂₁, Allyloxymethyl steht, X für O, S, NH oder NR' steht und R' ein organischer cyclischer oder acyclischer, gegebenenfalls substituierter Rest mit 1 bis 26 Kohlenstoffatomen ist.

22. Polyetheralkohole gemäß Patentanspruch 21, **dadurch gekennzeichnet, dass** sie eine Kettenlänge von 10 bis 100 aufweisen.

23. Polyetheralkohole gemäß Patentanspruch 21 oder 22, **dadurch gekennzeichnet, dass** sie eine Molekulargewichtsverteilung M_{w}/Mₙ von nicht mehr als 1,08, insbesondere nicht mehr als 1,06 aufweisen.

24. Polyetheralkohole gemäß einem der Patentansprüche 21 bis 23, **dadurch gekennzeichnet, dass** der Ethylenoxidgehalt im Produkt geringer als 10 ppm ist.

## Claims

1. Process for preparing polyether alcohols of the general formula (I) 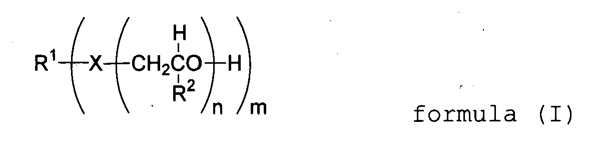 by alkoxylating compounds of the general formula R¹(XH)ₘ in a microstructured reactor with parallel-connected channel arrays for carrying out chemical reactions between substantially liquid reaction partners, optionally in the presence of a solid catalyst, the chemical process taking place in spaces which are formed by two or more substantially plane-parallel plates or layers, wherein the reactants are mixed individually in each reaction channel in monophasic liquid form and a heat exchanger apparatus, specifically a cooling or heating apparatus, is provided, and the reactor is designed for pressures of up to 800 bar and temperatures in the range from -30°C to 400°C, **characterized in that** the compound R¹(XH)ₘ and a suitable catalyst are mixed and introduced into the reactor, from 1 to 300, preferably from 2 to 150, equivalents of alkylene oxide are fed thereto, directly or at a plurality of points, into the reactor and mixed with the compound R¹(XH)ₘ, catalyst and/or subsequent products thereof, reacted in the reaction channels at a temperature in the range from 50 to 300°C and a pressure in the range of from 11 to 800 bar, and subsequently the product mixture is cooled, where R¹ in the general formula R¹(XH)ₘ is a mono- or polyvalent organic radical, m is a corresponding integer, R² in the molecule is uniformly or differently hydrogen and/or an organic radical, in particular CH₃, C₂H₅, phenyl, C₁₀H₂₁, allyloyloxymethyl, X is O, S, NH or NR', and R' is an organic cyclic or acyclic, optionally substituted radical having from 1 to-26 carbon atoms.

2. The process according to Claim 1, **characterized in that** the process is operated continuously.

3. Process according to Claim 1 or 2, **characterized in that** the residence time of the reaction mixture in the reaction channel is from 1 to 600 s, in particular from 50 to 400 s, very particularly from 100 to 300 s.

4. Process according to one of Claims 1 to 3, **characterized in that** the reaction temperature in the reaction channels is in the range from 80 to 200°C, in particular from 120 to 200°C.

5. Process according to one of Claims 1 to 4, **characterized in that** the pressure in the reaction channels is from 40 to 500 bar, in particular from 60 to 180 bar.

6. Process according to one of Claims 1 to 5, **characterized in that** X is O.

7. Process according to Claim 6, **characterized in that** mono- or polyhydric alcohols, in particular alkylene alcohols and/or alkyl alcohols, are used.

8. Process according to Claim 6, **characterized in that** fatty acids, phosphoric esters and/or phosphoric acids are used.

9. Process according to one of Claims 1 to 5, **characterized in that** X is NH.

10. Process according to one of Claims 6 to 9, **characterized in that** the alkylene oxide is ethylene oxide, propylene oxide, butylene oxide, styrene oxide, dodecene oxide and/or allyl glycidyl ether.

11. Process according to one of Claims 1 to 10, **characterized in that** the catalyst is used in an amount of from 0.001 to 30%, based on the amount of the compound of the general formula R¹(XH)ₘ.

12. Process according to Claim 11, **characterized in that** the catalyst is a base, in particular an alkali metal methoxide and/or an alkali metal hydroxide.

13. Process according to Claim 12, **characterized in that** the catalyst is used in an amount of from 0.01 to 30%, in particular from 1 to 15%, based on the amount of the compound of the general formula R¹(XH)ₘ.

14. Process according to Claim 11, **characterized in that** the catalyst is an acid and/or an organometallic compound, in particular a bimetallic compound.

15. Process according to Claim 14, **characterized in that** the catalyst is used in an amount of from 0.001 to 10%, in particular from 0.01 to 3%, based on the amount of the compound of the general formula R¹(XH)ₘ.

16. Process according to one of Claims 1 to 15, **characterized in that** alkylene oxide, different alkylene oxides and/or mixtures of different alkylene oxides are fed to the reaction capillaries through one or more, in particular up to 20, inlet points as per Claim 5.

17. Process according to Claim 1, **characterized in that** the reaction channels are profiled and/or provided with regular alterations in the flow path.

18. Process according to Claim 1 or 2, **characterized in that** hydraulic diameters of the channels of less than 2 mm, in particular less than 1 mm, are used.

19. Process according to one of Claims 1 to 3, **characterized in that** a cooling apparatus is provided and the cooling apparatus comprises cooling channels in the cooling plate parallel or at right angles to the flow direction of the reaction medium.

20. Process according to one of Claims 1 to 4, **characterized in that** a plurality of, in particular up to 20, inlet points for identical or different reactants are provided in the reaction channels.

21. Polyether alcohols of the general formula (I) 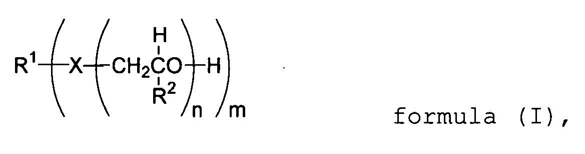 obtainable by a process according to one of Claims 1 to 20, **characterized in that** they have a chain length n in the range of from 1 to 100 and a molecular weight distribution M_{w}/Mₙ of not more than 1.20, where R¹ in the general formula R¹(XH)ₘ is a mono- or polyvalent organic radical, m is a corresponding integer, R² in the molecule is uniformly or differently hydrogen and/or an organic radical, in particular CH₃, C₂H₅, phenyl, C₁₀H₂₁, allyloyloxymethyl, X is O, S, NH or NR', and R' is an organic cyclic or acyclic, optionally substituted radical having from 1 to 26 carbon atoms.

22. Polyether alcohols according to Claim 21, **characterized in that** they have a chain length of from 10 to 100.

23. Polyether alcohols according to Claim 21 or 22, **characterized in that** they have a molecular weight distribution M_{w/}Mₙ of not more than 1.08, in particular not more than 1.06.

24. Polyether alcohols according to one of Claims 21 to 23, **characterized in that** the ethylene oxide content in the product is less than 10 ppm.

## Revendications

1. Procédé de fabrication de polyétheralcools de formule générale (I) 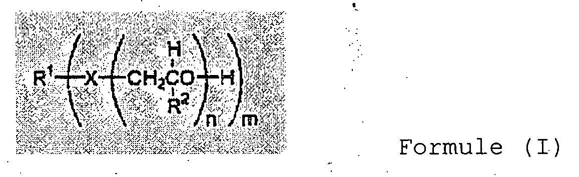 par alcoxylation de composés de formule générale R¹(XH)ₘ dans un réacteur microstructure avec des ensembles de canaux reliés en parallèle pour la réalisation de réactions chimiques entre des partenaires de réaction essentiellement liquides, éventuellement en présence d'un catalyseur solide, la réalisation du procédé chimique ayant lieu dans des zones formées de deux plaques ou couches essentiellement parallèles ou plus, le mélange d'adduits étant réalisé individuellement en une phase liquide dans chaque canal de réaction et un dispositif d'échange de chaleur, à savoir un dispositif de refroidissement ou de réchauffement, étant prévu et le réacteur pouvant être exposé à une pression allant jusqu'à 800 bars et une température dans la gamme -30 °C à 400 °C, **caractérisé en ce que** le composé R¹(XH)ₘ et un catalyseur approprié sont mélangés et introduits dans le réacteur, puis de 1 à 300, de préférence de 2 à 150 équivalents d'oxyde d'alkylène sont introduits directement ou à plusieurs emplacements dans le réacteur et mélangés avec le composé R¹(XH)ₘ, le catalyseur et/ou leurs produits dérivés, puis mis en réaction dans les canaux de réaction à une température dans la gamme 50 à 300°C et une pression dans la gamme 11 à 800 bars et enfin le mélange de produits est refroidi, R¹ dans la formule générale R¹(XH)ₘ représentant un radical organique monovalent ou polyvalent, m représentant un nombre entier approprié, R² dans la molécule représentant de manière uniforme ou différente l'hydrogène et/ou un radical organique, notamment CH₃, C₂H₅, phényle, C₁₀H₂₁, allyloxyméthyle, X représentant O, S, NH ou NR' et R' représentant un radical organique cyclique ou acyclique éventuellement substitué ayant de 1 à 26 atomes de carbone.

2. Procédé selon la revendication 1, **caractérisé en ce que** le procédé fonctionne de manière continue.

3. Procédé selon la revendication 1 ou 2, **caractérisé en ce que** le temps de séjour du mélange réactionnel dans le canal de réaction est de 1 à 600 s, notamment de 50 à 400 s, plus particulièrement de 100 à 300 s.

4. Procédé selon l'une quelconque des revendications 1 à 3, **caractérisé en ce que** la température de réaction dans les canaux de réaction est dans la gamme 80 à 200 °C, notamment 120 à 200 °C.

5. Procédé selon l'une quelconque des revendications 1 à 4, **caractérisé en ce que** la pression dans les canaux de réaction est de 40 à 500, notamment de 60 à 180 bars.

6. Procédé selon l'une quelconque des revendications 1 à 5, **caractérisé en ce que** X représente O.

7. Procédé selon la revendication 6, **caractérisé en ce qu'**un alcool monovalent ou polyvalent, notamment un alkylène alcool et/ou un alcool alkylique, est utilisé.

8. Procédé selon la revendication 6, **caractérisé en ce que** des acides gras, des esters d'acide phosphorique et/ou des acides phosphoriques sont utilisés.

9. Procédé selon l'une quelconque des revendications 1 à 5, **caractérisé en ce que** X représente NH.

10. Procédé selon l'une quelconque des revendications 6 à 9, **caractérisé en ce que** l'oxyde d'alkylène est l'oxyde d'éthylène, l'oxyde de propylène, l'oxyde de butylène, l'oxyde de styrène, l'oxyde de dodécène et/ou l'éther allylglycidylique.

11. Procédé selon l'une quelconque des revendications 1 à 10, **caractérisé en ce que** le catalyseur est utilisé en une quantité de 0,001 à 30 % par rapport à la quantité du composé de formule générale R¹(XH)ₘ.

12. Procédé selon la revendication 11, **caractérisé en ce que** le catalyseur est une base, notamment un méthanolate de métal alcalin et/ou un hydroxyde de métal alcalin.

13. Procédé selon la revendication 12, **caractérisé en ce que** le catalyseur est utilisé en une quantité de 0,01 à 30 %, notamment de 1 à 15 %, par rapport à la quantité du composé de formule générale R¹(XH)ₘ.

14. Procédé selon la revendication 11, **caractérisé en ce que** le catalyseur est un acide et/ou un composé organométallique, notamment un composé bimétallique.

15. Procédé selon la revendication 14, **caractérisé en ce que** le catalyseur est utilisé en une quantité de 0,001 à 10 %, notamment de 0,01 à 3 %, par rapport à la quantité du composé de formule générale R¹(XH)ₘ.

16. Composé selon l'une quelconque des revendications 1 à 15, **caractérisé en ce qu'**un oxyde d'alkylène, différents oxydes d'alkylène et/ou un mélange de différents oxydes d'alkylène est introduit par un ou plusieurs, notamment jusqu'à 20 zones d'entrée des capillaires de réaction selon la revendication 5.

17. Procédé selon la revendication 1, **caractérisé en ce que** les canaux de réaction sont profilés et/ou munis de modifications régulières de la direction du courant.

18. Procédé selon la revendication 1 ou 2, **caractérisé en ce que** le diamètre hydraulique des canaux est inférieur à 2 mm, notamment inférieur à 1 mm.

19. Procédé selon l'une quelconque des revendications 1 à 3, **caractérisé en ce qu'**un dispositif de refroidissement est prévu, ledit dispositif de refroidissement comprenant des canaux de refroidissement dans la plaque de refroidissement, parallèles ou perpendiculaires à la direction du courant du milieu réactionnel.

20. Procédé selon l'une quelconque des revendications 1 à 4, **caractérisé en ce que** plusieurs, notamment jusqu'à 20 zones d'entrée pour adduits identiques ou différents sont prévues dans les canaux de réaction.

21. Polyétheralcool de formule générale (I) 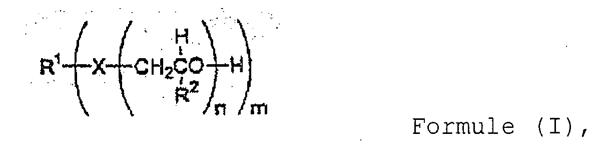 pouvant être obtenu par un procédé selon l'une quelconque des revendications 1 à 20, **caractérisé en ce qu'**il présente une longueur de chaîne n dans la gamme 1 à 100 et une distribution de poids moléculaire M_{w}/Mₙ inférieure ou égale à 1,20, R¹ dans la formule générale R¹(XH)ₘ représentant un radical organique monovalent ou polyvalent, m représentant un nombre entier approprié, R² dans la molécule représentant de manière uniforme ou différente l'hydrogène et/ou un radical organique, notamment CH₃, C₂H₅, phényle, C₁₀H₂₁, allyloxyméthyle, X représentant O, S, NH ou NR' et R' représentant un radical organique cyclique ou acyclique éventuellement substitué ayant de 1 à 26 atomes de carbone.

22. Polyéther alcool selon la revendication 21, **caractérisé en ce qu'**il présente une longueur de chaîne de 10 à 100.

23. Polyétheralcool selon la revendication 21 ou 22, **caractérisé en ce qu'**il présente une distribution de poids moléculaire M_{w}/Mₙ inférieure ou égale à 1,08, notamment inférieure ou égale à 1,06.

24. Polyétheralcool selon l'une quelconque des revendications 21 à 23, **caractérisé en ce que** la teneur en oxyde d'éthylène dans le produit est inférieure à 10 ppm.
